# EUROPÄISCHE PATENTSCHRIFT

(11) **EP 3 514 122 B1**
(45) Veröffentlichungstag und Bekanntmachung des Hinweises auf die Patenterteilung: **18.08.2021**
(21) Anmeldenummer: 19150512.2
(22) Anmeldetag: 07.01.2019
(51) Int. Cl.: C04B 33/04, C04B 35/10, C04B 35/18, C04B 38/10

(54) **VERFAHREN ZUR HERSTELLUNG PORÖSER ANORGANISCHER FORMKÖRPER**
METHOD FOR PRODUCING POROUS INORGANIC SHAPED ARTICLES
PROCÉDÉ DE FABRICATION DE CORPS MOULÉ INORGANIQUE POREUX

(30) Priorität: 23.01.2018 DE 102018200969
(43) Veröffentlichungstag der Anmeldung: 24.07.2019
(73) Patentinhaber: FRAUNHOFER-GESELLSCHAFT zur Förderung der angewandten Forschung e.V., 80686 München (DE)
(72) Erfinder: Hoffmann, Prof.em. Dr. Heinz, 95448 Bayreuth (DE); Vogt, Joachim, 95466 Kirchenpingarten (DE); Martini, Tanja, 97299 Zell am Main (DE)
(74) Vertreter: Pfenning, Meinig & Partner mbB

(56) Entgegenhaltungen:
- WO-A1-2011/098983
- WO-A2-2007/043022
- US-A1- 2017 321 026

## Beschreibung

Die vorliegende Erfindung betrifft ein Verfahren zur Herstellung poröser anorganischer Formkörper, in welchem zunächst ein aufgeschäumter Schlicker hergestellt wird, anschließend der aufgeschäumte Schlicker in eine Gussform gegeben und darin durch eine Wärmebehandlung vorgehärtet wird, um einen Schaum-Grünkörper herzustellen, und schließlich der Schaumgrünkörper gesintert wird, wodurch ein poröser anorganischer Formkörper erhalten wird. Der aufgeschäumte Schlicker enthält keramische Pulverpartikel, mindestens einen assoziativen Verdicker, mindestens einen Schaumstabilisator und Wasser, wobei zu dessen Herstellung die keramischen Pulverpartikel, der assoziative Verdicker und der Schaumstabilisator gleichzeitig oder nacheinander in beliebiger Reihenfolge in das Wasser eingebracht werden. Zudem wird die wässrige Mischung nach dem Einbringen von einer, von zwei oder von allen drei der genannten Komponenten mechanisch aufgeschäumt wird. Der assoziative Verdicker wird hierbei bereits vor dem mechanischen Aufschäumen in das Wasser eingebracht. Mit dem erfindungsgemäßen Verfahren können unter Verwendung von kostengünstigen, umweltfreundlichen und gesundheitlich unbedenklichen Stoffen auf einfache Weise hochporöse anorganische Formkörper hergestellt werden.

Hochporöse Keramikformteile finden Anwendung in Bereichen, in welchen typische Eigenschaften von Keramiken wie z.B. eine hohe thermische und chemische Stabilität und eine tendenziell niedrige Kriechneigung, kombiniert werden soll mit Eigenschaften wie z.B. einer niedrigen Wärmekapazität oder -leitfähigkeit, geringem Eigengewicht, definierten Porengeometrien, oder einer hohen spezifischen Oberfläche. So finden diese Werkstoffe Anwendung z.B. als hochtemperaturstabile Isolationsmaterialien, Leichtbaumaterialien, Brennhilfsmittel, in der Filtration von Heißgasen und Metallschmelzen, als Katalysatorträger oder als Knochenersatzmaterial. Für die Herstellung solcher Komponenten gibt es je nach Endanwendung verschiedene Verfahren. Diese haben jedoch in der Regel Einschränkungen hinsichtlich der erreichbaren Bauteileigenschaften, nutzen umweltgefährdende oder giftige Chemikalien, oder sind in der Herstellung wenig ressourcen- und energieeffizient.

Es sind diverse Verfahren bekannt, mit denen hochporöse Keramiken mit Porositäten > 45 Vol.-% hergestellt werden können. Ein Verfahren zu Herstellung hochporöser Keramikkomponenten stellt das Verpressen keramischer Fasern unter Vakuum dar. Die so produzierten sogenannten Vakuumformteile eignen sich sehr gut als Hochtemperatur-Isolationsmaterial, sind jedoch in der Regel teuer in der Anschaffung, mechanisch nur mäßig stabil, und neigen zur Bildung von z. T. gesundheitsgefährdenden Faserstäuben bei abrasiver Belastung.

Des Weiteren können poröse Keramikelemente durch Verpressen oder Extrudieren von Versätzen mit grobkörnigen oder porösen Pulverrohstoffen hergestellt werden. Hierbei sind die erreichbaren Porositäten jedoch verfahrensbedingt limitiert.

Zur Herstellung hochporöser Keramiken über Schäumungsverfahren müssen gezielt Poren in das Bulkmaterial eingebracht werden. Hierzu gibt es wiederum verschiedene Ansätze, welche im Folgenden dargestellt werden:
1. In den sogenannten Replikaverfahren werden als Abformkörper dienende poröse organische Materialien, wie z. B. Polyurethane, mit flüssigen Keramikvorstufen infiltriert und anschließend die organischen Komponenten im Zuge der Temperaturbehandlung ausgebrannt. Zurück bleiben retikuläre, hochporöse Keramikelemente. Diese Anwendung ist z.B. in US 2012/142526 A1, US 2011/0097259 A1, WO 2008/055707 A1, US 2005/266227 A1, US 4912076, EP 1931446 B1 und CN 106892678 A beschrieben.
2. Eine weitere Verfahrensgruppe, welche mit dem oben beschriebenen Verfahren verwandt ist, stellen die sogenannten Templatverfahren dar. In ihrem Falle werden den flüssigen oder pastösen Keramikversätzen organische Füllstoffe zugesetzt, welche nach der Formgebung und Trocknung bzw. Härtung ebenfalls während der Temperaturbehandlung ausgebrannt werden. In DE 19851713 A1, DE 3835807 A1, US 3880969, EP 1951641 B1, US 2003/166449 A1, US 2008/022644 A1 oder WO 2013/041322 A2 findet diese Herstellroute Anwendung.
3. In der chemischen Direktschäumung wird in dem Matrixmaterial Porosität dadurch erzeugt, dass der flüssigen Keramikvorstufe Verbindungen zugesetzt werden, welche sich bei erhöhter Temperatur zersetzen oder miteinander reagieren. Hierbei bilden sich flüchtige Gase, welche dann das Matrixmaterial aufschäumen. Ein bekanntes Beispiel dazu ist die Schäumung von Schlickern durch die Eindispergierung von feinem Aluminiumpulver (DE 19851713 A1), welches unter Wasserstoffbildung mit Wasser zu Al₂O₃ reagiert. Weitere Ausführungen sind in US 4812424 A, WO 1999/051541 A1, US 8323742 B2, US 2005146066 A und WO 2013/137727 A1 zu finden.
4. Im Falle der physikalischen oder mechanischen Direktschäumung erfolgt das Aufschäumen der flüssigen Keramikvorstufe durch die gezielte Einbringung eines Gases, im einfachsten Falle von Luft, in den Schlicker. In diesem Fall können die Gase entweder über eine Düse in einen keramischen Schlicker eingeblasen, oder über mechanische Arbeit, z.B. über einen Rührer, eingeschlagen werden. In der Regel wird hierbei der flüssigen Vorstufe ein Schaummittel, wie z. B. ein Tensid zugesetzt, welches in wässrigen Lösungen leicht Schäume bilden kann. Mit einfachen niedermolekularen Tensiden erzeugte Schäume sind allerdings in der Regel nicht langzeitstabil, und altern nach verschiedenen Prozessen, wie Ostwaldreifung, Koaleszenz oder Drainage. Um diese Prozesse zu verhindern, werden Geliermittel zugesetzt. In EP 1329438 A1 werden z.B. Biopolymere wie Xanthan und Gelatine verwendet, durch welche die wässrige Phase geliert und somit verfestigt wird. Hierdurch werden die Schaumbläschen so stabilisiert, dass sie sich nicht mehr verändern können. Die gelierten und geschäumten Schlicker können anschließend getrocknet und gesintert werden. Weitere Methoden sind in CN 104402522 A, WO 2007/068127 A1, US 2009197756 A, WO 2014/092436 A1, DE 10 2015 202277 B3 und US 4889670 A beschrieben.

Die WO 2007/043022 A2 betrifft ein Verfahren zur Herstellung poröser keramischer Werkstoffe, das den Vorteil bietet, die poröse Struktur je nach gewünschter Anwendungsart zu steuern und einzustellen.

Die US 2017/0321026 A1 offenbart eine Schaumformulierung zur Herstellung von mit Polymer gepfropften Nanopartikeln stabilisiertem Schaum, umfassend Nanopartikel, Monomere eines auf die Nanopartikeloberfläche zu pfropfenden Polymers, Polymerisationsinitiator, Tensid und Wasser.

Die WO 2011/098983 A1 ist gerichtet auf anorganische Strukturen mit kontrollierter offenzelliger Porosität und daraus hergestellte Gegenstände. Strukturelle anorganische zellulare Materialien mit kontrollierter offener Porosität werden durch Aufschäumen feiner, mit Partikeln beladener wässriger Lösungen zu stabilen dodekaedrischen Schaumstrukturen hergestellt, die durch Mikrowellenenergie oder sofortige elektrische Hochspannungsentladung getrocknet und gesintert werden.

Ausgehend hiervon war es die Aufgabe der vorliegenden Erfindung ein kostengünstiges und umweltfreundliches Verfahren anzugeben, mit welchem auf einfache Weise hochporöse anorganische Formkörper hergestellt werden können.

Diese Aufgabe wird bezüglich eines Verfahrens zur Herstellung poröser anorganischer Formkörper mit den Merkmalen des Patentanspruchs 1 gelöst. Die abhängigen Patentansprüche betreffen bevorzugte Ausgestaltungsformen.

Erfindungsgemäß wird somit ein Verfahren zur Herstellung poröser anorganischer Formkörper angegeben, welches die folgenden Schritte umfasst:
a) Herstellen eines aufgeschäumten Schlickers enthaltend
   (i) keramische Pulverpartikel,
   (ii) mindestens einen (oberflächenaktiven) assoziativen Verdicker,
   (iii) mindestens einen Schaumstabilisator, und
   (iv) Wasser,
   wobei die Komponenten (i) bis (iii) gleichzeitig oder nacheinander in beliebiger Reihenfolge in das Wasser eingebracht werden und die wässrige Mischung nach dem Einbringen von einer, von zwei oder von allen drei der Komponenten (i) bis (iii) mechanisch aufgeschäumt wird, wobei die Komponente (ii) vor dem mechanischen Aufschäumen in das Wasser eingebracht wird,
b) Herstellen eines Schaum-Grünkörpers, wobei der aufgeschäumte Schlicker in eine Gussform gegeben und darin durch eine Wärmebehandlung vorgehärtet wird,
c) Sintern des Schaum-Grünkörpers, wodurch ein poröser anorganischer Formkörper erhalten wird
wobei der in Schritt a) hergestellte aufgeschäumte keramische Schlicker 0,5 bis 5 Gew.-% des mindestens einen assoziativen Verdickers, bezogen auf die Gesamtmasse des aufgeschäumten keramischen Schlickers, enthält.

In Schritt a) wird ein aufgeschäumter Schlicker hergestellt, welcher die Komponenten (i) bis (iv), d.h. (i) keramische Pulverpartikel, (ii) mindestens einen assoziativen Verdicker, (iii) mindestens einen Schaumstabilisator und (iv) Wasser, enthält. Hierbei werden die keramischen Pulverpartikel, d.h. Komponente (i), der mindestens eine assoziative Verdicker, d.h. Komponente (ii), und der mindestens eine Schaumstabilisator, d.h. Komponente (iii), in das Wasser, d.h. Komponente (iv), eingebracht. Die Komponenten (i) bis (iii) können gleichzeitig, teilweise gleichzeitig oder nacheinander in das Wasser eingebracht werden. Die Komponenten (i) bis (iii) können zudem in beliebiger Reihenfolge in das Wasser eingebracht werden. Die durch das Einbringen einer oder mehrerer der Komponenten (i) bis (iii) erhaltene wässrige Mischung (bzw. der dadurch erhaltene Schlicker) wird mechanisch, z.B. mit Hilfe einer Rührvorrichtung, aufgeschäumt. Dieses mechanische Aufschäumen kann nach dem Einbringen von einer, von zwei oder von allen drei der Komponenten (i) bis (iii) in das Wasser, d.h. Komponente (iv), erfolgen. Das mechanische Aufschäumen erfolgt jedoch erst, nachdem der mindestens eine assoziative Verdicker, d.h. Komponente (ii), in das Wasser eingebracht wurde. Dies bedeutet, dass der mindestens eine assoziative Verdicker vor dem mechanischen Aufschäumen in das Wasser bzw. die wässrige Mischung eingebracht wird.

Wird die Komponente (i) und/oder (iii) nach dem mechanischen Aufschäumen in die aufgeschäumte wässrige Mischung eingebracht, kann nach diesem Einbringen die Mischung homogenisiert werden. Alternativ oder zusätzlich kann auch ein nochmaliges Aufschäumen durchgeführt werden.

Somit ist es beispielsweise möglich, dass zunächst alle drei Komponenten (i) bis (iii) entweder gleichzeitig oder nacheinander in beliebiger Reihenfolge in das Wasser eingebracht werden und im Anschluss die hierdurch entstandene wässrige Mischung mechanisch aufgeschäumt wird. Alternativ ist es aber beispielsweise auch möglich, dass zunächst nur die Komponente (ii) in das Wasser eingebracht wird, anschließend die dabei entstandene wässrige Mischung mechanisch aufgeschäumt wird, und danach die beiden Komponenten (i) und (iii) in das Wasser bzw. die wässrige Mischung eingebracht werden, wobei im Anschluss ein Homogenisierung oder ein weiteres mechanisches Aufschäumen der wässrigen Mischung erfolgen kann. Gemäß einer weiteren Alternative ist es beispielsweise auch möglich, dass zunächst die Komponenten (i) und (ii) oder die Komponenten (ii) und (iii) in das Wasser eingebracht werden, anschließend die dabei entstandene wässrige Mischung mechanisch aufgeschäumt wird, und danach die letzte Komponente, d.h. Komponente (iii) bzw. (i) in das Wasser bzw. die wässrige Mischung eingebracht wird, wobei im Anschluss ein Homogenisieren oder ein weiteres mechanisches Aufschäumen der wässrigen Mischung erfolgen kann.

In Schritt b) wird der in Schritt a) hergestellte aufgeschäumte Schlicker in eine Gussform gegeben und darin durch eine Wärmebehandlung vorgehärtet. Auf diese Weise wird ein Schaum-Grünkörper hergestellt, der eine endkonturnahe Form aufweist. Die resultierenden Schaum-Grünkörper sind sehr robust, und können sogar mechanisch nach bearbeitet werden.

In Schritt c) wird der in Schritt b) hergestellte Schaum-Grünkörper gesintert, wodurch schließlich ein poröser anorganischer Formkörper erhalten wird.

In Rahmen der vorliegenden Erfindung wird ein Ansatz zur Herstellung von hochporösen keramischen Schaumstrukturen verfolgt, welcher thematisch der mechanischen Direktschäumung (siehe oberer Punkt 4) zuzuordnen ist. Es wurde ein Verfahren entwickelt, welches es erlaubt, aus in Wasser gelösten umweltfreundlichen und gesundheitlich unbedenklichen assoziativen Verdickern und Schaumstabilisatoren, zusammen mit stofflich nicht eingeschränkten keramischen Pulvern oder Pulvermischungen keramische Schäume zu erzeugen.

Die Grundlage für die Herstellung der hochporösen Keramiken in der vorliegenden Erfindung stellen zunächst sogenannte assoziative Verdicker dar, wie z.B. PureThix® 1442 (Eckart Effect Pigments, im Folgenden: "PureThix"), welche im erfindungsgemäßen Verfahren als Schäumungsmittel fungieren. Typische Vertreter für die eingesetzten assoziativen Verdicker sind aliphatisch funktionalisierte Polyether. Diese Verbindungen sind bisher in der Fachwelt nicht als Schaummittel, sondern vielmehr als Vernetzer bzw. Verdickungsmittel bekannt, und werden z.B. in der Kosmetikindustrie für Lippenstifte oder der Nahrungsmittelindustrie eingesetzt. Die Vernetzermoleküle bestehen aus nichtionogenen Polymeren, welche Seitengruppen enthalten, die sich gegenseitig vernetzen und dadurch die wässrige Dispersion gelieren, wodurch eine rheologische Fließgrenze eingeführt wird. Diese Fließgrenze stellt die Grundlage für die Schäumbarkeit und kurzfristige Stabilität der wasserbasierten Suspensionen dar.

In Lösungen aus den besagten assoziativen Verdickern und Wasser können keramische Partikel oder präkeramische Precursoren dispergiert werden. Die so erzeugten Suspensionen lassen sich über einfache Gerätetechnik wie z.B. einem Blattrührer anschließend bis zu dem vierfachen Volumen einfach direkt mechanisch aufschäumen, was die Basis für eine einfache und effiziente Herstellung von hochporösen keramischen Schaumkörpern darstellt. Beispiele für verwendbare keramische Pulver sind u.a. Cordierit, Korund, Mullit und γ-Tonerden, jedoch sind auch beliebige weitere Stoffsysteme und Stoffkombinationen denkbar.

Im erfindungsgemäßen Verfahren können ausschließlich gesundheitlich und umwelttechnisch unbedenkliche Stoffe verwendet werden, um aus gewöhnlichen keramischen Suspensionen hochporöse keramische Formkörper herstellen zu können. Da die Porosierung über Direktschäumung erfolgt, müssen keine Ausbrennstoffe verwendet werden. Zusätzlich sind die Rohstoffe sehr kostengünstig und in großen Mengen beziehbar, wodurch sich das erfindungsgemäße Verfahren auch für die Herstellung günstigerer, ressourcen- und energieeffizienter Feuerleichtsteine, Isolierelemente, Filter etc. eignet. Das erfindungsgemäße Verfahren ist daher kostengünstig und umweltfreundlich.

Durch die Direktschäumung wird die Porosität in den Formkörpern durch das einfache Einrühren von Luft durch mechanische Arbeit erzeugt, ohne aufwändige Gerätetechnik. Ferner können die verwendeten keramischen Pulverrohstoffe quasi beliebig gewählt und kombiniert werden, und so prinzipiell auch Materialkombinationen und -verbünde realisiert werden. Es können beispielsweise Pulverkörnungen bis zu einem d₅₀-Wert von 100 µm verarbeitet werden. Zudem kann durch Variation der Anteile der Komponenten im aufgeschäumten Schlicker die Größe der Gasblasen im aufgeschäumten Schlicker gesteuert, und hierdurch die Größe der resultierenden Poren im keramischen Schaumkörper beeinflusst werden. Aus diesen Gründen ist das erfindungsgemäße Herstellverfahren extrem flexibel hinsichtlich der erschließbaren Produktpalette.

Die verwendeten assoziativen Verdicker können rückstandsfrei ausgebrannt werden, ohne dass Verunreinigungen durch Phosphate, Sulfonate, etc. in dem Material verbleiben.

Da der Gehalt an Organik gering ist, und die auszubrennenden Komponenten direkt über die bereits vorhandene, hohe offene Porosität entweichen können, kann die Entbinderung der Grünkörper schnell und effizient durchgeführt werden. Dies stellt vor allem gegenüber den etablierten Ausbrennverfahren einen merklichen Vorteil hinsichtlich des Energiebedarfs und des CO₂-Footprints eines hochporösen Keramikelementes dar. Auch aus diesem Grund ist das erfindungsgemäße Verfahren sehr umweltfreundlich.

Aufgrund dessen können mit dem erfindungsgemäßen Verfahren unter Verwendung von kostengünstigen, umweltfreundlichen und gesundheitlich unbedenklichen Stoffen auf einfache und umweltfreundliche Weise hochporöse anorganische Formkörper hergestellt werden.

Eine bevorzugte Variante des erfindungsgemäßen Verfahrens zeichnet sich dadurch aus, dass der mindestens eine assoziative Verdicker mindestens ein amphiphiles Polymer enthält oder daraus besteht, welches vorzugsweise ausgewählt ist aus der Gruppe bestehend aus Polyestern, Polyethern, insbesondere Polyether-1, Cellulose-Ethern, modifizierten Cellulosederivaten, z.B. hydrophob modifizierte Hydroxyethylcellulose (HMHEC), Ethylhydroxyethylcellulose (EHEC), Hydroxypropylcellulose (HPC), modifizierten Acrylamiden (RAM), hydrophob modifizierten Alkali-quellbaren EmulsionsPolymeren (HASE bzw. "hydrophobically modified alkali-swellable emulsions"), hydrophob modifizierten ethoxylierten Urethanen (HEUR), hydrophob modifizierten und/oder kreuzvernetzten Polyacrylaten (HM-PAA bzw. "hydrophobically modified polyacrylamide", CL-PAA bzw. "cross-linked polyacrylamide", HMCL-PAA bzw. "hydrophobically modified cross-linked polyacrylamide"), und Mischungen hiervon. Vorzugsweise ist das mindestens eine amphiphile Polymer ein Polyether, insbesondere Polyether-1, oder eine Mischung aus Polyethern. Besonders bevorzugt ist das mindestens eine amphiphile Polymer ein aliphatisch funktionalisierter Polyether, insbesondere Polyether-1, oder eine Mischung aus aliphatisch funktionalisierten Polyethern. Beispielsweise handelt es sich bei dem mindestens einen assoziativen Verdicker um Polyether-1 bzw. ein Copolymer aus PEG-180, Dodoxynol-5, PEG-25-tristyrylphenol und Tetramethoxymethylglycouril-Monomeren (PureThix 1442®).

Wasserbasierte Schäume aus Schaummitteln sind in der Regel nicht langzeitstabil, vor allem nicht, wenn zusätzlich keramische Pulverpartikel in den Schäumen dispergiert werden. Die Schäume zerfallen in der Regel vor oder spätestens während der Trocknung. Aus diesem Grunde enthält der im erfindungsgemäßen Verfahren hergestellte und verwendete aufgeschäumte Schlicker einen Schaumstabilisator, welcher eine Stabilisierung der geschäumten Lösungen bzw. Dispersionen ermöglicht.

Der mindestens eine Schaumstabilisator kann vernetzbare organische Verbindungen, d.h. Verbindungen, welche zur Ausbildung eines Netzwerks geeignet sind, enthalten. Solche Verbindungen sind beispielsweise Proteine und Saccharide.

Eine weitere bevorzugte Variante des erfindungsgemäßen Verfahrens ist dadurch gekennzeichnet, dass der mindestens eine Schaumstabilisator ausgewählt ist aus der Gruppe bestehend aus Proteinen, Sacchariden und Mischungen hiervon. Als Protein wird vorzugsweise Gluten verwendet. Bei den Sacchariden handelt es sich vorzugsweise um Polysaccharide und/oder Zucker, wobei die Zucker bevorzugt ausgewählt sind aus der Gruppe bestehend aus Monosacchariden, Disacchariden und Mischungen hiervon. Als Monosaccharid kann z.B. Glucose und/oder Saccharose eingesetzt werden. Bei den Polysacchariden handelt es sich vorzugsweise um synthetische, d.h. synthetisch hergestellte, Polysaccharide. Die synthetischen Polysaccharide sind dabei bevorzugt ausgewählt aus der Gruppe bestehend aus (hydrophob) modifizierten Polysacchariden, wie z.B. hydrophob modifizierten Cellulosen, Pektinen, Xanthanen, Diutan Gum, Levan, und Mischungen hiervon.

Proteine und Saccharide sind sehr umweltfreundliche und gesundheitlich verträgliche Stoffe, die eine sehr gute Stabilisierung des Schaums ermöglichen.

Gemäß einer besonders bevorzugten Ausführungsform enthält der mindestens eine Schaumstabilisator
- mindestens ein Protein, vorzugsweise Gluten, und mindestens einen Zucker ausgewählt aus der Gruppe bestehend aus Monosacchariden, Disacchariden und Mischungen hiervon, oder
- mindestens ein Polysaccharid, vorzugsweise mindestens ein synthetisches Polysaccharid, und mindestens einen Zucker ausgewählt aus der Gruppe bestehend aus Monosacchariden, Disacchariden und Mischungen hiervon.

Auf diese Weise kann eine besonders gute Stabilisierung des Schaums erreicht werden, wobei es sich bei den genannten Verbindungen ausschließlich um besonders umweltfreundliche und gesundheitlich verträgliche Stoffe handelt.

Der im erfindungsgemäßen Verfahren verwendete Schaumstabilisator dient zur Stabilisierung des Schaumgerüsts nach der Direktschäumung. Die über die Direktschäumung erzeugten keramischen Schlickerschäume werden hierbei mittelfristig gegen das Zusammenfallen der Schaumstruktur infolge von Drainage und Koagulation stabilisiert. Ermöglicht wird dies z.B. durch Gelierungs- bzw. Vernetzungs- oder Abbindereaktionen des Schaumstabilisators.

Beispielsweise kann eine solche Stabilisierung durch Denaturierung von Proteinen, wie z.B. Gluten, erreicht werden. In diesem Fall können zum Beispiel einem Schaumschlicker oder bereits geschäumten Schlicker, welcher lediglich Wasser, keramische Partikel, und einen assoziativen Verdicker enthält, mindestens ein Protein und mindestens ein Zucker beigemischt werden. Diese sind in der Lage, nach dem Aufschäumen des Schlickers und der Formgebung des Schaumes in einer Temperaturbehandlung z.B. im Bereich von < 100 °C durch Wärmeeinwirkung zu denaturieren, und somit ein Gelnetzwerk auszubilden. Letzteres stabilisiert die Schäume gegen das Kollabieren.

Gemäß einem weiteren Beispiel können zur Stabilisierung Polysaccharide eingesetzt werden. Hierbei kann den Schlickern, welche z.B. erneut lediglich aus deionisiertem Wasser, einem assoziativen Verdicker, und keramischen Partikeln bestehen können, eine Kombination aus Zucker und Polyacchariden, vorzugsweise synthetischen Polysacchariden, welche als hoch effektive Rheologieadditive bekannt sind, zugegeben werden. Die Zugabe und Homogenisierung erfolgt hierbei z.B. nach dem Aufschäumen des Stamm-Schlickers. Die Gelbildung erfolgt durch die Ausbildung eines Netzwerkes aus den Molekülketten des technischen bzw. synthetischen Polysaccharids und des Zuckers, z.B. Glucose und/oder Saccharose. Dieses starre Netzwerk bewirkt eine hohe Fließgrenze, welche eine Stabilisierung des Schaumes ermöglicht. Die so stabilisierten Schäume können anschließend im Trockenschrank getrocknet, entbindert und gesintert werden.

Eine weitere bevorzugte Variante des erfindungsgemäßen Verfahrens zeichnet sich dadurch aus, dass die keramischen Pulverpartikel ausgewählt sind aus der Gruppe bestehend aus Oxidkeramiken (bzw. Oxidkeramik-Partikeln), Silikatkeramiken (bzw. Silikatkeramik-Partikeln), Nichtoxidkeramiken (bzw. Nichtoxidkeramik-Partikeln) und Mischungen hiervon. Besonders bevorzugt sind die keramischen Pulverpartikel ausgewählt aus der Gruppe bestehend aus Cordierit-Pulverpartikeln, Korund-Pulverpartikeln, Mullit-Pulverpartikeln, γ-Tonerde-Pulverpartikeln und Mischungen hiervon. Besonders bevorzugt handelt es sich bei den keramischen Pulverpartikeln um Aluminiumoxid-Pulverpartikel.

Der in Schritt a) hergestellte aufgeschäumte keramische Schlicker enthält 0,5 bis 5 Gew.-% des mindestens einen assoziativen Verdickers, bezogen auf die Gesamtmasse des aufgeschäumten keramischen Schlickers. Weiterhin ist es bevorzugt, dass der in Schritt a) hergestellte aufgeschäumte keramische Schlicker 10 bis 50 Gew.-% der keramischen Pulverpartikel und/oder 0,5 bis 30 Gew.-% des mindestens einen Schaumstabilisators und/oder 49 bis 80 Gew.-% Wasser, jeweils bezogen auf die Gesamtmasse des aufgeschäumten keramischen Schlickers, enthält. Bei Verwendung dieser gewichtsprozentualen Anteile der einzelnen Komponenten (i) bis (iv) kann eine ganz besonders gute Stabilisierung des Schaums erreicht werden.

Vorzugsweise handelt es sich bei dem als Komponente (iv) verwendeten Wasser um deionisiertes Wasser.

Gemäß einer weiteren bevorzugten Verfahrensvariante wird das mechanische Aufschäumen in Schritt a) mit Hilfe einer Rührvorrichtung, vorzugsweise mit Hilfe eines Blattrührers oder eines Dissolverrührers, durchgeführt.

Eine weitere bevorzugte Variante des Verfahrens ist dadurch gekennzeichnet, dass in Schritt a)
- zunächst die Komponenten (i) bis (iii) in das Wasser eingebracht werden und anschließend die dabei entstandene wässrige Mischung mechanisch aufgeschäumt wird, oder
- zunächst die Komponenten (i) und (ii) in das Wasser eingebracht werden, anschließend die dabei entstandene wässrige Mischung mechanisch aufgeschäumt wird und danach die Komponente (iii) in die aufgeschäumte wässrige Mischung eingebracht wird, oder
- zunächst die Komponenten (ii) und (iii) in das Wasser eingebracht werden, anschließend die dabei entstandene wässrige Mischung mechanisch aufgeschäumt wird und danach die Komponente (i) in die aufgeschäumte wässrige Mischung eingebracht wird.

Wird die Komponente (i) und/oder (iii) nach dem mechanischen Aufschäumen in die aufgeschäumte wässrige Mischung eingebracht, kann nach diesem Einbringen die Mischung homogenisiert werden. Alternativ oder zusätzlich kann auch ein nochmaliges Aufschäumen durchgeführt werden.

Eine weitere bevorzugte Verfahrensvariante zeichnet sich dadurch aus, dass der in Schritt a) hergestellte aufgeschäumte Schlicker zusätzlich Tannin-Partikel enthält, welche innerhalb von Schritt a) zusätzlich zu den Komponenten (i) bis (iii) in das Wasser eingebracht werden.

Gemäß einer weiteren bevorzugten Verfahrensvariante besteht der in Schritt a) hergestellte aufgeschäumte Schlicker aus den Komponenten (i) bis (iv) sowie optional Tannin-Partikeln.

Eine weitere bevorzugte Variante des erfindungsgemäßen Verfahrens ist dadurch gekennzeichnet, dass die Wärmebehandlung in Schritt b) bei einer Temperatur von bis zu 100 °C, bevorzugt bei einer Temperatur von 20 °C bis 100 °C, besonders bevorzugt bei einer Temperatur von 60 °C bis 100 °C, und/oder über einen Zeitraum von 1 bis 48 Stunden, bevorzugt über einen Zeitraum von 2 bis 36 Stunden, besonders bevorzugt über einen Zeitraum von 3 bis 24 Stunden, erfolgt.

Zudem ist es bevorzugt, dass das Sintern in Schritt c) bei Temperaturen von über 1000 °C, vorzugsweise bei Temperaturen von über 1200 °C, und/oder über einen Zeitraum von 1 bis 5 Stunden, vorzugsweise über einen Zeitraum von 2 bis 4 Stunden, erfolgt.

Gemäß einer weiteren bevorzugten Verfahrensvariante wird der in Schritt b) hergestellte Schaum-Grünkörper vor dem Sintern in Schritt c) getrocknet und/oder entbindert, wobei das Entbindern vorzugsweise mit Heizraten < 10 K/min, besonders bevorzugt mit Heizraten < 1 K/min, erfolgt. Das Trocknen wird vorzugsweise durch Wärmebehandlung erreicht. Das Trocknen des Schaum-Grünkörpers kann dabei auch mit dem Vorhärten des aufgeschäumten Schlickers zusammen innerhalb der gleichen Wärmebehandlung durchgeführt werden.

Offenbart wird zudem ein poröser anorganischer Formköper, welcher nach dem erfindungsgemäßen Verfahren herstellbar ist.

Die erfindungsgemäß hergestellten Formkörper lassen sich in ihrer Struktur von Schäumen aus Ausbrennverfahren (Replika oder Sacrificial Template) oder Hohlkugel-Erzeugnissen unterscheiden. Bei Schäumen aus Direktschäumung, welche mithilfe von hydraulisch abbindenden Zementen stabilisiert wurden, können gegebenenfalls Calciumrückstände nachgewiesen werden, die in den erfindungsgemäß hergestellten Formkörpern nicht auftreten.

Offenbart wird auch die Verwendung des porösen anorganischen Formkörpers als Brennhilfsmittel für Hochleistungskeramiken, lasttragende Hochtemperaturbauteile, Feuerleichtsteine, Isolationskomponenten, Katalysatorträger, Filterelemente, Leichtbaumaterialien und/oder Knochenersatzmaterial.

Aufgrund der vielfältigen Möglichkeiten, die Porosität, die Materialzusammensetzung, die endkonturnahe Form, und somit die resultierenden Eigenschaften der hochporösen Keramikformteile zu beeinflussen, erschließt das erfindungsgemäße Verfahren durch die Vielzahl an möglichen Produkten ein breites Anwendungsfeld.

Im Falle von Porositäten unterhalb von 70 Vol.-% können die Produkte z.B. als Brennhilfsmittel für Hochleistungskeramiken, lasttragende Hochtemperaturbauteile, Feuerleichtsteine oder ähnliches verwendet werden.

Im Falle von Porositäten oberhalb von 70 Vol .-% können die hochporösen Keramiken z.B. als Isolationskomponenten, als mechanisch gering belastete Feuerleichtsteine, als Katalysatorträger, oder als Filterelemente Anwendung finden.

Die Erfindung wird anhand der nachfolgenden Figuren und Beispiele näher erläutert, ohne die Erfindung auf die speziell dargestellten Merkmale und Parameter zu beschränken.

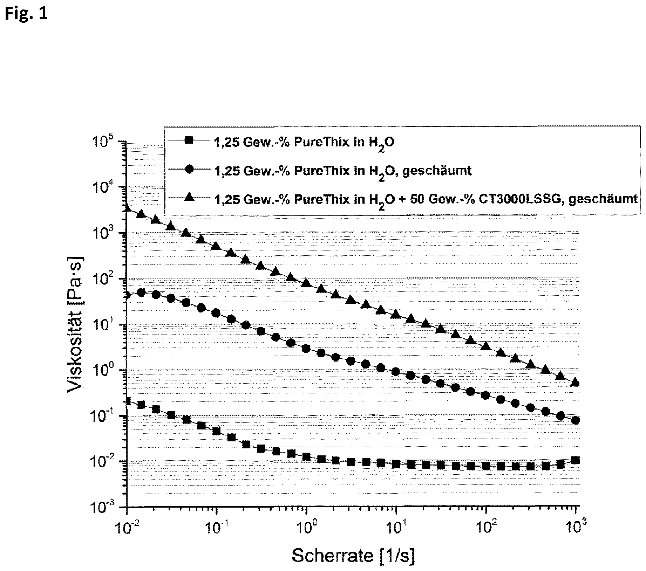

In Fig. 1 sind Fließkurven einer Rotationsmessung dargestellt, welche die Abhängigkeit der gemessenen Viskosität von der Scherrate einer 1,25%igen PureThix-Lösung in normalem, d.h. ungeschäumtem, Zustand, in geschäumtem Zustand und in mit 50 Gew.-% Aluminiumoxid-Partikeln versetztem und geschäumtem Zustand zeigen. Hierbei wurde das Aluminiumoxid-Pulver CT3000LSSG (Almatis) verwendet.

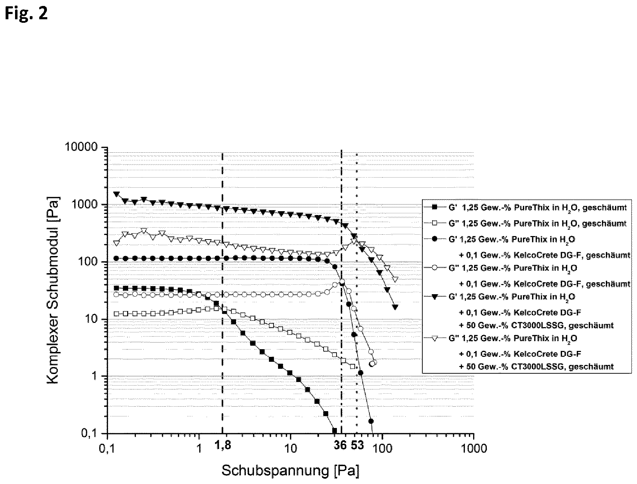

In Fig. 2 sind Oszillationsmessungen (schubspannungsgesteuerte Amplitudensweeps mit ω = 10 rad/s) geschäumter PureThix-Lösungen dargestellt, welcher zusätzlich das Polysaccharid KelcoCrete DG-F sowie das Aluminiumoxid-Pulver CT3000LSSG (Almatis, d₅₀-Wert 0,5 µm) zugesetzt wurden. Dargestellt sind jeweils der Speichermodul G' sowie der Verlustmodul G". Es ist zu erkennen, dass durch das Aufschäumen eine Fließgrenze entsteht, wodurch die eingebrachten Gasblasen gegen deren Koagulation und Aufsteigen kurzfristig stabilisiert werden. Aufgrund dieser sind die enthaltenen keramischen Pulverpartikel gegen deren Sedimentation geschützt. Aufgrund von unterschiedlich stark ausgeprägten Fließgrenzen (der Betrag der Fließgrenze ergibt sich aus dem Kreuzungspunkt von G' und G" und ist unten auf der x-Achse indiziert) kann die Größe der Gasblasen durch die Zusammensetzung der Schaumschlicker gesteuert, und hierdurch die Größe der resultierenden Poren im keramischen Schaumkörper beeinflusst werden.

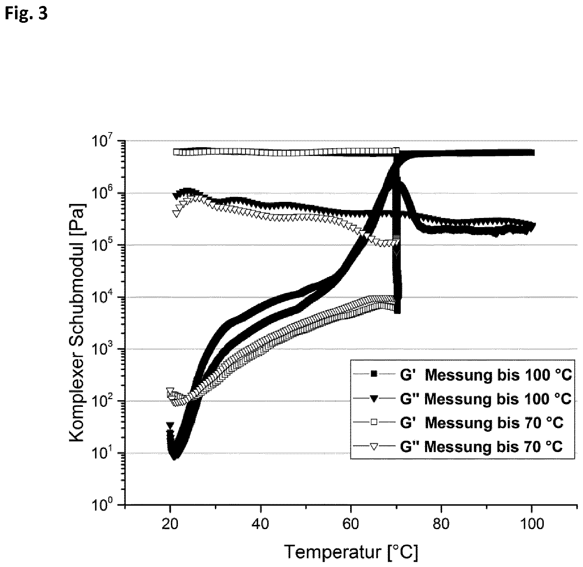

In Fig. 3 ist der Verlauf einer Vernetzungsreaktion, wie sie im erfindungsgemäßen Verfahren bei Stabilisierung des Schaumgerüsts durch den Schaumstabilisator auftreten kann, dargestellt. Als Schaumstabilisator wurde hier eine Mischung aus Protein, z.B. Gluten, und Zucker, z.B. Glucose, verwendet. In Fig. 3 ist nun eine Oszillationsmessung im Rheometer im Zeitsweep-Modus dargestellt. Im Falle der dunklen bzw. schwarzen Kurve wurde von 20 °C bis 100 °C geheizt, und wieder abgekühlt. Im Falle der hellen bzw. weißen Kurve wurde bis 70 °C geheizt, vier Stunden bei dieser Temperatur gehalten, und dann wieder abgekühlt. In beiden Fällen findet ein Anstieg des Speichermodules G' um ca. fünfeinhalb Größenordnungen und ein Anstieg des Verlustmodules G" um ca. vier bis fünf Größenordnungen statt. Dies entspricht einer massiven Verfestigung des Gelnetzwerkes, was eine effektive Stabilisierung des Schaumkörpers bewirkt. Die resultierenden Schaum-Grünkörper sind sehr robust, und können sogar mechanisch nach bearbeitet werden.

### Ausführungsbeispiel 1: Aluminiumoxid-Schaum aus mechanischer Direktschäumung, stabilisiert durch vernetzende Proteine

Es werden 1,25 Gew.-% des assoziativen Verdickers PureThix 1442® (Altana) in deionisiertem Wasser gelöst. In einem 500 mL-Becherglas wird in 80 g dieser Lösung eine zuvor homogenisierte Pulvermischung aus 6 g Gluten (Weizenkleber, Adler-Mühle Bahlingen) und 6 g handelsüblichem Raffinadezucker eingerührt, ohne zunächst Luftblasen zu erzeugen. Anschließend wird diese Masse mit einem Turbinenrührer (Durchmesser ca. 25 mm) ca. 4 min bei einer Drehzahl von ca. 2000 Upm mechanisch aufgeschäumt. Anschließend wird in den Schaum bei derselben Drehzahl über einen Zeitraum von ca. 2 min eine zuvor homogenisierte Pulvermischung aus 6 g Tannin (Kremer Pigmente) und 74 g Aluminiumoxid CT 3000 LS SG (Almatis) homogen eingerührt, und anschließend weitere 4 min bei derselben Drehzahl gerührt. Der Schaum wird in eine gewünschte Form gegeben, und im Trockenschrank bei 70 °C über 24 h geliert und getrocknet. Der Schaum-Grünkörper wird hiernach entformt, mit Heizraten < 1 K/min entbindert und bei Temperaturen oberhalb von 1000 °C gesintert.

Ein bei 1300 °C über 2 h gesinterter Schaum (Aufheizrate 5 K/min) weist eine offene Porosität von ca. 70 Vol.-%, eine Rohdichte von ca. 1,20 g/cm³, eine Kaltdruckfestigkeit von ca. 16 MPa, und eine Raumtemperatur-Wärmeleitfähigkeit von ca. 1,0 W/mK auf.

### Ausführungsbeispiel 2: Aluminiumoxid-Schaum aus mechanischer Direktschäumung, stabilisiert durch synthetische Polysaccharide.

Es werden 1,25 Gew.-% des assoziativen Verdickers PureThix 1442® (Altana) in deionisiertem Wasser gelöst. In einem 150 mL-Becherglas wird in 40 g dieser Lösung eine zuvor homogenisierte Pulvermischung aus 0,3 g modifiziertem Polysaccharid (Kelco-Crete DG-F, CP Kelco) und 10 g Raffinadezucker homogen eingerührt, ohne zunächst Blasen zu erzeugen. Anschließend wird diese Masse mit einem Turbinenrührer (Durchmesser ca. 25 mm) ca. 4 min bei einer Drehzahl von ca. 2000 Upm mechanisch aufgeschäumt. Anschließend wird in den Schaum bei derselben Drehzahl über einen Zeitraum von ca. 2 min 60 g Aluminiumoxid CT 3000 LS SG (Almatis) homogen eingerührt, und anschließend weitere 4 min bei derselben Drehzahl gerührt. Der Schaum wird in eine gewünschte Form gegeben, und im Trockenschrank bei 90 °C über 3 h getrocknet. Der Schaum-Grünkörper wird hiernach entformt, mit Heizraten < 2 K/min entbindert und bei Temperaturen oberhalb von 1000 °C gesintert.

Ein bei 1300 °C über 2 h gesinterter Schaum (Aufheizrate 5 K/min) weist eine offene Porosität von ca. 78 Vol.-%, eine Rohdichte von ca. 0,88 g/cm³, eine Kaltdruckfestigkeit von ca. 2,5 MPa, und eine Raumtemperatur-Wärmeleitfähigkeit von ca. 1,0 W/mK auf.

## Patentansprüche

1. Verfahren zur Herstellung poröser anorganischer Formkörper umfassend die folgenden Schritte:
a) Herstellen eines aufgeschäumten Schlickers enthaltend
(i) keramische Pulverpartikel,
(ii) mindestens einen assoziativen Verdicker,
(iii) mindestens einen Schaumstabilisator, und
(iv) Wasser,
wobei die Komponenten (i) bis (iii) gleichzeitig oder nacheinander in beliebiger Reihenfolge in das Wasser eingebracht werden und die wässrige Mischung nach dem Einbringen von einer, von zwei oder von allen drei der Komponenten (i) bis (iii) mechanisch aufgeschäumt wird, wobei die Komponente (ii) vor dem mechanischen Aufschäumen in das Wasser eingebracht wird,
b) Herstellen eines Schaum-Grünkörpers, wobei der aufgeschäumte Schlicker in eine Gussform gegeben und darin durch eine Wärmebehandlung vorgehärtet wird,
c) Sintern des Schaum-Grünkörpers, wodurch ein poröser anorganischer Formkörper erhalten wird,
wobei der in Schritt a) hergestellte aufgeschäumte keramische Schlicker 0,5 bis 5 Gew.-% des mindestens einen assoziativen Verdickers, bezogen auf die Gesamtmasse des aufgeschäumten keramischen Schlickers, enthält.

2. Verfahren nach dem vorhegenden Anspruch, **dadurch gekennzeichnet, dass** der mindestens eine assoziative Verdicker mindestens ein amphiphiles Polymer enthält, welches vorzugsweise ausgewählt ist aus der Gruppe bestehend aus Polyestern, Polyethern, insbesondere Polyether-1, Cellulose-Ethern, modifizierten Cellulosederivaten, modifizierten Acrylamiden, hydrophob modifizierten Alkali-quellbaren Emulsions-Polymeren, hydrophob modifizierten ethoxylierten Urethanen, hydrophob modifizierten und/oder kreuzvernetzten Polyacrylaten, und Mischungen hiervon, wobei das mindestens eine amphiphile Polymer besonders bevorzugt ein aliphatisch funktionalisierter Polyether, insbesondere Polyether-1, oder eine Mischung aus aliphatisch funktionalisierten Polyethern ist.

3. Verfahren nach einem der vorhergehenden Ansprüche, **dadurch gekennzeichnet, dass** der mindestens eine Schaumstabilisator ausgewählt ist aus der Gruppe bestehend aus Proteinen, Sacchariden und Mischungen hiervon.

4. Verfahren nach einem der vorhergehenden Ansprüche, **dadurch gekennzeichnet, dass** der mindestens eine Schaumstabilisator
- mindestens ein Protein, vorzugsweise Gluten, und mindestens einen Zucker ausgewählt aus der Gruppe bestehend aus Monosacchariden, Disacchariden und Mischungen hiervon, oder
- mindestens ein Polysaccharid, vorzugsweise mindestens ein synthetisches Polysaccharid, und mindestens einen Zucker ausgewählt aus der Gruppe bestehend aus Monosacchariden, Disacchariden und Mischungen hiervon
enthält oder daraus besteht.

5. Verfahren nach einem der vorhergehenden Ansprüche, **dadurch gekennzeichnet, dass** die keramischen Pulverpartikel ausgewählt sind aus der Gruppe bestehend aus Oxidkeramiken, Silikatkeramiken, Nichtoxidkeramiken und Mischungen hiervon, wobei die keramischen Pulverpartikel vorzugsweise ausgewählt sind aus der Gruppe bestehend aus Cordierit-Pulverpartikeln, Korund-Pulverpartikeln, Mullit-Pulverpartikeln, γ-Tonerde-Pulverpartikeln und Mischungen hiervon.

6. Verfahren nach einem der vorhergehenden Ansprüche, **dadurch gekennzeichnet, dass** der in Schritt a) hergestellte aufgeschäumte keramische Schlicker 10 bis 50 Gew.-% der keramischen Pulverpartikel und/oder 0,5 bis 30 Gew.-% des mindestens einen Schaumstabilisators und/oder 49 bis 80 Gew.-% Wasser, jeweils bezogen auf die Gesamtmasse des aufgeschäumten keramischen Schlickers, enthält.

7. Verfahren nach einem der vorhergehenden Ansprüche, **dadurch gekennzeichnet, dass** das mechanische Aufschäumen in Schritt a) mit Hilfe einer Rührvorrichtung, vorzugsweise eines Blattrührers oder eines Dissolverrührers, durchgeführt wird.

8. Verfahren nach einem der vorhergehenden Ansprüche, **dadurch gekennzeichnet, dass** in Schritt a)
- zunächst die Komponenten (i) bis (iii) in das Wasser eingebracht werden und anschließend die dabei entstandene wässrige Mischung mechanisch aufgeschäumt wird, oder
- zunächst die Komponenten (i) und (ii) in das Wasser eingebracht werden, anschließend die dabei entstandene wässrige Mischung mechanisch aufgeschäumt wird und danach die Komponente (iii) in die aufgeschäumte wässrige Mischung eingebracht wird, oder
- zunächst die Komponenten (ii) und (iii) in das Wasser eingebracht werden, anschließend die dabei entstandene wässrige Mischung mechanisch aufgeschäumt wird und danach die Komponente (i) in die aufgeschäumte wässrige Mischung eingebracht wird.

9. Verfahren nach einem der vorhergehenden Ansprüche, **dadurch gekennzeichnet, dass** der in Schritt a) hergestellte aufgeschäumte Schlicker zusätzlich Tannin-Partikel enthält, welche innerhalb von Schritt a) zusätzlich zu den Komponenten (i) bis (iii) in das Wasser eingebracht werden.

10. Verfahren nach einem der vorhergehenden Ansprüche, **dadurch gekennzeichnet, dass** der in Schritt a) hergestellte aufgeschäumte Schlicker aus den Komponenten (i) bis (iv) sowie optional Tannin-Partikeln besteht.

11. Verfahren nach einem der vorhergehenden Ansprüche, **dadurch gekennzeichnet, dass** die Wärmebehandlung in Schritt b) bei einer Temperatur von bis zu 100 °C, bevorzugt bei einer Temperatur von 20 °C bis 100 °C, besonders bevorzugt bei einer Temperatur von 60 °C bis 100 °C, und/oder über einen Zeitraum von 1 bis 48 Stunden, bevorzugt über einen Zeitraum von 2 bis 36 Stunden, besonders bevorzugt über einen Zeitraum von 3 bis 24 Stunden, erfolgt.

12. Verfahren nach einem der vorhergehenden Ansprüche, **dadurch gekennzeichnet, dass** das Sintern in Schritt c) bei Temperaturen von über 1000 °C, vorzugsweise bei Temperaturen von über 1200 °C, und/oder über einen Zeitraum von 1 bis 5 Stunden, vorzugsweise über einen Zeitraum von 2 bis 4 Stunden, erfolgt.

13. Verfahren nach einem der vorhergehenden Ansprüche, **dadurch gekennzeichnet, dass** der in Schritt b) hergestellte Schaum-Grünkörper vor dem Sintern in Schritt c) getrocknet und/oder entbindert wird, wobei das Entbindern vorzugsweise mit Heizraten < 10 K/min, besonders bevorzugt mit Heizraten < 1 K/min, erfolgt.

## Claims

1. Method for the production of porous inorganic molded bodies comprising the following steps:
a) producing a foamed slurry containing
(i) ceramic powder particles,
(ii) at least one associative thickener,
(iii) at least one foam stabilizer, and
(iv) water,
wherein the components (i) to (iii) are introduced into the water simultaneously or one after the other in any order and the aqueous mixture is mechanically foamed after the introduction of one, of two or of all three of the components (i) to (iii), wherein the component (ii) is introduced into the water before mechanical foaming,
b) producing a foam green body, wherein the foamed slurry is placed in a casting mold and is pre-hardened therein by means of a heat treatment,
c) sintering the foam green body, whereby a porous inorganic molded body is obtained,
wherein the foamed ceramic slurry produced in step a) contains 0.5 to 5% by weight of the at least one associative thickener, based on the total mass of the foamed ceramic slurry.

2. Method according to the preceding claim, **characterized in that** the at least one associative thickener contains at least one amphiphilic polymer which is preferably selected from the group consisting of polyesters, polyethers, particularly polyether-1, cellulose ethers, modified cellulose derivatives, modified acrylamides, hydrophobically modified alkali-swellable emulsion polymers, hydrophobically modified ethoxylated urethanes, hydrophobically modified and/or cross-linked polyacrylates, and mixtures thereof, wherein the at least one amphiphilic polymer is particularly preferably an aliphatically functionalized polyether, particularly polyether-1, or a mixture of aliphatically functionalized polyethers.

3. Method according to any one of the preceding claims, **characterized in that** the at least one foam stabilizer is selected from the group consisting of proteins, saccharides and mixtures thereof.

4. Method according to any one of the preceding claims, **characterized in that** the at least one foam stabilizer contains or consists of
- at least one protein, preferably gluten, and at least one sugar selected from the group consisting of monosaccharides, disaccharides and mixtures thereof, or
- at least one polysaccharide, preferably at least one synthetic polysaccharide, and at least one sugar selected from the group consisting of monosaccharides, disaccharides and mixtures thereof.

5. Method according to any one of the preceding claims, **characterized in that** the ceramic powder particles are selected from the group consisting of oxide ceramics, silicate ceramics, non-oxide ceramics and mixtures thereof, wherein the ceramic powder particles are preferably selected from the group consisting of cordierite powder particles, corundum powder particles, mullite powder particles, γ-alumina powder particles, and mixtures thereof.

6. Method according to any one of the preceding claims, **characterized in that** the foamed ceramic slurry produced in step a) contains 10 to 50% by weight of the ceramic powder particles and/or 0.5 to 30% by weight of the at least one foam stabilizer and/or 49 to 80% by weight of water, based in each case on the total mass of the foamed ceramic slurry.

7. Method according to any one of the preceding claims, **characterized in that** the mechanical foaming in step a) is performed with the aid of a stirring device, preferably a blade stirrer or a dissolver stirrer.

8. Method according to any one of the preceding claims, **characterized in that** in step a)
- the components (i) to (iii) are first introduced into the water and then the resulting aqueous mixture is mechanically foamed, or
- the components (i) and (ii) are first introduced into the water, then the resulting aqueous mixture is mechanically foamed and then the component (iii) is introduced into the foamed aqueous mixture, or
- the components (ii) and (iii) are first introduced into the water, then the resulting aqueous mixture is mechanically foamed and then the component (i) is introduced into the foamed aqueous mixture.

9. Method according to any one of the preceding claims, **characterized in that** the foamed slurry produced in step a) additionally contains tannin particles which are introduced into the water within step a) in addition to the components (i) to (iii).

10. Method according to any one of the preceding claims, **characterized in that** the foamed slurry produced in step a) consists of the components (i) to (iv) and optionally tannin particles.

11. Method according to any one of the preceding claims, **characterized in that** the heat treatment in step b) takes place at a temperature of up to 100 °C, preferably at a temperature of 20 °C to 100 °C, particularly preferably at a temperature of 60 °C to 100 °C and/or over a period of 1 to 48 hours, preferably over a period of 2 to 36 hours, particularly preferably over a period of 3 to 24 hours.

12. Method according to any one of the preceding claims, **characterized in that** the sintering in step c) takes place at temperatures of over 1000 °C, preferably at temperatures of over 1200 °C, and/or over a period of 1 to 5 hours, preferably over a period of 2 to 4 hours.

13. Method according to any one of the preceding claims, **characterized in that** the foam green body produced in step b) is dried and/or debindered prior to the sintering in step c), wherein the debinding preferably takes place at heating rates < 10 K/min, particularly preferably at heating rates < 1 K/min.

## Revendications

1. Procédé de fabrication de corps moulés inorganiques poreux comprenant les étapes suivantes :
a) préparation d'une mousse de barbotine contenant
(i) des particules de poudre céramique,
(ii) au moins un épaississant associatif,
(iii) au moins un stabilisateur de mousse, et
(iv) de l'eau,
dans lequel les composants (i) à (iii) sont introduits dans l'eau simultanément ou successivement dans un ordre quelconque et le mélange aqueux est amené mécaniquement à mousser après l'introduction d'un, de deux ou des trois composants (i) à (iii), dans lequel le composant (ii) est introduit dans l'eau avant le moussage mécanique,
b) préparation d'un corps cru en mousse, au cours de laquelle la mousse de barbotine est placée dans un moule et y est prédurcie par un traitement thermique,
c) frittage du corps cru en mousse, de manière à obtenir un corps moulé inorganique poreux,
dans lequel la mousse de barbotine céramique préparée à l'étape a) contient 0,5 à 5 % en masse de l'ai moins un épaississant associatif par rapport à la masse totale de la mousse de barbotine céramique.

2. Procédé selon la revendication précédente, **caractérisé en ce que** l'au moins un épaississant associatif contient au moins un polymère amphiphile choisi de préférence dans le groupe comprenant les polyesters, les polyéthers, en particulier le polyéther-1, les éthers de cellulose, les dérivés de cellulose modifiés, les acrylamides modifiés, les polymères d'émulsion à modification hydrophobe gonflant en milieu alcalin, les uréthanes éthoxylés à modification hydrophobe, les polyacrylates à modification hydrophobe et/ou réticulés, et les mélanges de ceux-ci, dans lequel le ou les polymères amphiphiles sont de préférence des polyéthers fonctionnalisés aliphatiques, en particulier des polyéthers-1, ou un mélange de polyéthers fonctionnalisés aliphatiques.

3. Procédé selon l'une des revendications précédentes, **caractérisé en ce que** le ou les stabilisateurs de mousse sont choisis dans le groupe comprenant les protéines, les saccharides et les mélanges de ceux-ci.

4. Procédé selon l'une des revendications précédentes, **caractérisé en ce que** le ou les stabilisateurs de mousse comprennent ou consistent en
- au moins une protéine, de préférence le gluten, et au moins un sucre choisi dans le groupe comprenant les monosaccharides, les disaccharides et les mélanges de ceux-ci, ou
- au moins un polysaccharide, de préférence au moins un polysaccharide synthétique, et au moins un sucre choisi dans le groupe comprenant les monosaccharides, les disaccharides et les mélanges de ceux-ci
ou en est constitué.

5. Procédé selon l'une des revendications précédentes, **caractérisé en ce que** les particules de poudre céramique sont choisies dans le groupe comprenant les céramiques d'oxyde, les céramiques de silicate, les céramiques sans oxyde et les mélanges de celles-ci, dans lequel les particules de poudre céramique sont de préférence choisies dans le groupe comprenant les particules de poudre de cordiérite, les particules de poudre de corindon, les particules de poudre de mullite, les particules de poudre d'alumine y, et les mélanges de celles-ci.

6. Procédé selon l'une des revendications précédentes, **caractérisé en ce que** la mousse de barbotine céramique préparée à l'étape a) contient 10 à 50 % en masse de particules de poudre céramique et/ou 0,5 à 30 % en masse du ou des stabilisateurs de mousse et/ou 49 à 80 % en masse d'eau, toujours par rapport à la masse totale de la mousse de barbotine céramique.

7. Procédé selon l'une des revendications précédentes, **caractérisé en ce que** le moussage mécanique de l'étape a) est réalisé à l'aide d'un dispositif d'agitation, de préférence un agitateur à palettes ou un agitateur dissolveur.

8. Procédé selon l'une des revendications précédentes, **caractérisé en ce que**, à l'étape a),
- les composants (i) à (iii) sont préalablement introduits dans l'eau et le mélange aqueux résultant est ensuite amené mécaniquement à mousser, ou
- les composants (i) et (ii) sont préalablement introduits dans l'eau, le mélange aqueux résultant est ensuite amené mécaniquement à mousser et le composant (iii) est alors introduit dans la mousse aqueuse, ou
- les composants (ii) et (iii) sont préalablement introduits dans l'eau, le mélange aqueux résultant est ensuite amené mécaniquement à mousser et le composant (i) est alors introduit dans la mousse aqueuse.

9. Procédé selon l'une des revendications précédentes, **caractérisé en ce que** la mousse de barbotine préparée à l'étape a) contient en outre des particules de tanin qui sont introduites dans l'eau à l'étape a) en sus des composants (i) à (iii).

10. Procédé selon l'une des revendications précédentes, **caractérisé en ce que** la mousse de barbotine préparée à l'étape a) comprend les composants (i) à (iv) ainsi qu'éventuellement des particules de tanin.

11. Procédé selon l'une des revendications précédentes, **caractérisé en ce que** le traitement thermique de l'étape b) est réalisé à une température inférieure ou égale à 100 °C, de préférence à une température comprise entre 20 °C et 100 °C, plus particulièrement à une température comprise entre 60 °C et 100 °C, et/ou sur une durée de 1 à 48 heures, de préférence sur une durée de 2 à 36 heures, et plus particulièrement sur une durée de 3 à 24 heures.

12. Procédé selon l'une des revendications précédentes, **caractérisé en ce que** le frittage de l'étape c) est réalisé à des températures supérieures à 1000 °C, de préférence à des températures supérieures à 1200 °C, et/ou sur une durée de 1 à 5 heures, de préférence sur une durée de 2 à 4 heures.

13. Procédé selon l'une des revendications précédentes, **caractérisé en ce que** le corps cru en mousse préparé à l'étape b) est séché et/ou délié avant le frittage de l'étape c), dans lequel le déliantage est réalisé de préférence à des taux de chauffe inférieurs à 10 K/min, et plus particulièrement à des taux de chauffe inférieurs à 1 K/min.
